# EUROPEAN PATENT APPLICATION

(11) **EP 4 707 216 A2**
(43) Date of publication of application: **11.03.2026**
(21) Application number: 25173491.9
(22) Date of filing: 30.04.2025
(51) Int. Cl.: B66C 13/20, B66C 23/48, B66F 3/42, B66F 3/44, B66F 5/04, F15B 1/00, B30B 1/00, B60B 29/00

(54) **OIL CIRCUIT SYSTEM, LIFTING DEVICE, ELECTRIC JACK, PRESS, CRANE, AND TIRE MOUNTING/DISMOUNTING AND TRANSPORT APPARATUS**

(30) Priority: 10.09.2024 CN 202411263068
(71) Applicant: Snit Hydraulic Co., Ltd., Fuzhou, Fujian 350015 (CN)
(72) Inventor: XU, Manqu, Fuzhou, 350015 (CN); LI, Zhenhao, Fuzhou, 350015 (CN); ZHENG, Haifa, Fuzhou, 350015 (CN); LIU, Yongqiang, Fuzhou, 350015 (CN)
(74) Representative: Metida

(57) **Abstract**

An oil circuit system applicable for a lifting device comprising:
a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800); and
an oil pressure within the lifting oil cylinder (110) in the second operating condition is greater than an oil pressure within the lifting oil cylinder (110) in the first operating condition.

## Description

### CROSS-REFERENCE TO PRIOR APPLICATION

This application claims the benefit of the priority of Chinese Patent Application No.202411263068.9 filed on September 10, 2024, the contents of which are incorporated herein by reference.

### TECHNICAL FIELD

The disclosure relates to the technical field of lifting tools, more particularly to an oil circuit system, a lifting device, an electric jack, a press, a crane, and a tire mounting/dismounting and transport apparatus.

### BACKGROUND

Currently, most hydraulic lifting pumps available on the market use compressed air sources from air compressors as the power and carry out oil intake and discharge through reciprocating motions of air pump pistons, thereby achieving lifting and lowering of the oil cylinders. Generally, the lifting pumps require a higher displacement speed under no-load or loaded low-pressure conditions and require a lower displacement speed under loaded high-pressure conditions. However, the hydraulic lifting pumps in the art, either driven by air pumps or motors, have a same displacement speed under loaded and no-load conditions and low-pressure and high-pressure conditions. To meet the operational requirements under loaded high-pressure conditions, the hydraulic lifting pumps run at relatively low overall displacement speeds. Consequently, the hydraulic lifting pumps have relatively low displacement speed under no-load low-pressure conditions, resulting in a reduced working efficiency and affecting user experience.

### SUMMARY

The goal of the disclosure is to provide an oil circuit system, a lifting device, an electric jack, a press, a crane, and a tire mounting/dismounting and transport apparatus, to solve the technical problem of low displacement speed under no-load low-pressure conditions of existing hydraulic lifting pumps that affect user experience.

In order to achieve the above goal, a first aspect of the disclosure provides an oil circuit system characterized by comprising:
a lifting oil cylinder 110, a tank 800, a first oil feed line 252, a second oil feed line 253, an oil inlet/outlet line 254, a pressure relief line 255, an oil return line 256, a first valve, and a second valve;
wherein the first valve is connected to the first oil feed line 252, the pressure relief line 255, and the oil return line 256; the second valve is connected to the first oil feed line 252 and the oil return line 256; the oil inlet/outlet line 254 has one end connected with the first oil feed line 252 and the second oil feed line 253, and another end connected with the lifting oil cylinder 110;
in a first operating condition of the lifting oil cylinder 110, both the first oil feed line 252 and the second oil feed line 253 supply hydraulic oil to the lifting oil cylinder 110;
in a second operating condition of the lifting oil cylinder 110, the second oil feed line 253 supplies the hydraulic oil to the lifting oil cylinder 110, the hydraulic oil within the first oil feed line 252 flows to the oil return line 256 via the second valve and returns to the tank 800, and an oil pressure within the lifting oil cylinder 110 in the second operating condition is greater than that in the first operating condition.

Preferably, the first valve may be a 4-Way, 2-Position valve 300.

Preferably, the first oil feed line 252 may be provided with a first oil inlet 251, a gear pump assembly 210, and a first oil outlet 2521, which are connected in such sequence along a first oil inlet direction through a pipeline, the first oil inlet 251 may be connected with the tank 800, and the first oil outlet 2521 may be connected with the lifting oil cylinder 110.

Preferably, the 4-Way, 2-Position valve 300 may include a port A, a port B, a port C, and a port D, wherein the port A may be connected with the first oil outlet 2521, the port B may be connected with the first oil feed line 252, the port C may be connected with the pressure relief line 255, and the port D may be connected with the oil return line 256.

Preferably, during a forward rotation of the gear pump assembly 210, the 4-Way, 2-Position valve may be in a first position, where the port A is in communication with the port B, the port C and the port D are not in communication with each other, and the lifting oil cylinder 110 is in a lifted state;
during a reverse rotation of the gear pump assembly 210, the 4-Way, 2-Position valve may be in a second position, where the port A is in communication with the port B, and the port C is in communication with the port D, and the lifting oil cylinder 110 is in a lowered state.

Preferably, the 4-Way, 2-Position valve 300 may be provided with a communication cavity 310, a pressure relief piston 320, and a third spring 322; wherein the communication cavity 310 is divided into an oil pass-through cavity 311 and an oil pressure relief cavity 312 by the pressure relief piston 320, the port A and the port B are located in the oil pass-through cavity 311, the port C and the port D are located in the oil pressure relief cavity 312, the oil pressure relief cavity 312 is connected with the pressure relief line 255 via the port C and with the oil return line 256 via the port D, and the oil pass-through cavity 311 is connected with the first oil outlet 2521 via the port A and with the first oil feed line 252 via the port B.

Preferably, in a normal state of the third spring 322, the pressure relief piston 320 may be biased to keep the port D sealed by the pressure relief piston 320, such that the 4-Way, 2-Position valve 300 is in a state in which the port C and the port D are not in communication.

Preferably, the second oil feed line 253 may be provided with a second oil inlet 2533, a plunger pump assembly 220, a second one-way valve 2531, and a second oil outlet 2534, which are connected in such sequence along a second oil inlet direction through a pipeline, the second oil inlet 2533 may be connected to a pipeline between the gear pump assembly 210 and the 4-Way, 2-Position valve 300, and the second oil outlet 2534 may be connected with the lifting oil cylinder 110.

Preferably, the oil inlet/outlet line 254 may have one end connected with the first oil outlet 2521 and the second oil outlet 2534, and another end connected with the lifting oil cylinder 110.

Preferably, the pressure relief line 255 may be provided with an inlet port connected to a pipeline between the gear pump assembly 210 and the first oil inlet 251, and an outlet port connected with the 4-Way, 2-Position valve 300.

Preferably, the oil return line 256 may be provided with an inlet port connected with the 4-Way, 2-Position valve 300 and an outlet port connected with the tank 800.

Preferably, a first one-way valve 2543 may be provided, which is located at an oil line between the first oil outlet 2521 and the 4-Way, 2-Position valve 300; the 4-Way, 2-Position valve 300 may be configured to drive the first one-way valve 2543 to open and thus allow the hydraulic oil to flow back to the gear pump assembly 210 via the first oil outlet 2521.

Preferably, the pressure relief piston 320 may be provided with a push rod 321 for opening the first one-way valve 2543; wherein the oil pass-through cavity 311 may be positioned at a pipeline between the first one-way valve 2543 and the gear pump assembly 210, and the first one-way valve 2543 may be connected with the oil pass-through cavity 311 via the port A.

Preferably, during a forward rotation of the gear pump assembly 210, the hydraulic oil may be pumped to the oil pass-through cavity 311, the first one-way valve 2543, and the first oil outlet 2521, and the port D may be kept sealed by the pressure relief piston 320;
during a reverse rotation of the gear pump assembly 210, the hydraulic oil may be pumped from the oil pass-through cavity 311 to the oil pressure relief cavity 312 through the pressure relief line 255, the hydraulic oil within the oil pressure relief cavity 312 may push the pressure relief piston 320 to move and thus open the port D, such that the port C and the port D of the 4-Way, 2-Position valve 300 are in communication with each other, and the pressure relief line 255 is in communication with the tank 800 through the oil pressure relief cavity 312 and the oil return line 256; and meanwhile, the pressure relief piston 320 may open the first one-way valve 2543 by the push rod 321, such that, by means of the gear pump assembly 210, the hydraulic oil within the lifting oil cylinder 110 is pumped to the inlet port of the pressure relief line 255, and then back to the tank 800 sequentially through the port C of the 4-Way, 2-Position valve 300, the port D of the 4-Way, 2-Position valve 300, and the oil return line 256.

Preferably, the second valve may be the first overflow valve 400, which comprises a first overflow port 2561 connected with a pipeline between the gear pump assembly 210 and the 4-Way, 2-Position valve 300, and the first overflow valve 400 may be connected with the oil return line 256.

Preferably, the oil return line 256 may be further provided with a second overflow port 2562 and a second overflow valve 500 sequentially connected through a pipeline, an overflow outlet port of the second overflow valve 500 may be connected with the tank 800 through the oil return line 256, and the second overflow port 2562 may be connected with a pipeline between the plunger pump assembly 220 and the second oil outlet 2534.

Preferably, it may further comprise a third one-way valve 2532 provided on a pipeline between the second oil inlet 2533 and the plunger pump assembly 220.

A lifting device is characterized by comprising a hydraulic pump 200 and a driving mechanism 230, wherein the hydraulic pump 200 comprises a drive spindle 240 and a pump body 250;
the lifting device further comprises an oil circuit system, and the oil circuit system comprises: a lifting oil cylinder 110, a tank 800, a first oil feed line 252, a second oil feed line 253, an oil inlet/outlet line 254, a pressure relief line 255, an oil return line 256, a first valve, and a second valve;
wherein the first valve is connected to the first oil feed line 252, the pressure relief line 255, and the oil return line 256; the second valve is connected to the first oil feed line 252 and the oil return line 256; the oil inlet/outlet line 254 has one end connected with the first oil feed line 252 and the second oil feed line 253, and another end connected with the lifting oil cylinder 110;
in a first operating condition of the lifting oil cylinder 110, both the first oil feed line 252 and the second oil feed line 253 supply hydraulic oil to the lifting oil cylinder 110;
in a second operating condition of the lifting oil cylinder 110, the second oil feed line 253 supplies the hydraulic oil to the lifting oil cylinder 110, the hydraulic oil within the first oil feed line 252 flows to the oil return line 256 via the second valve and returns to the tank 800, and an oil pressure within the lifting oil cylinder 110 in the second operating condition is greater than that in the first operating condition;
the first oil feed line 252 comprises a gear pump assembly 210, the second oil feed line 253 comprises a plunger pump assembly 220, and the drive spindle 240 is configured to drive the gear pump assembly 210 and the plunger pump assembly 220.

Preferably, all of the first oil feed line 252, the second oil feed line 253, and the oil return line 256 may be provided on the pump body 250;
The gear pump assembly 210 may comprise a drive gear 211 and a driven gear 212 which are engaged with each other; The plunger pump assembly 220 may comprise an oil inlet plunger 221 and an eccentric cam 222, and a telescopic end of the oil inlet plunger 221 may abut against an outer side of the eccentric cam 222; The drive spindle 240 may be disposed in the pump body 250 and rotatably connected with the pump body 250; Both the drive gear 211 and the eccentric cam 222 may be fixedly connected to the drive spindle 240;
The driving mechanism 230 may be configured to drive the drive spindle 240 to rotate to drive the eccentric cam 222 and thus drive the telescopic end of the oil inlet plunger 221 to perform reciprocating extension and retraction and drive the drive gear 211 and the driven gear 212 to rotate.

Preferably, a rotating bearing 223 may be sleeved on an outer side of the eccentric cam 222, and the rotating bearing 223 may abut against a telescopic end of the oil inlet plunger 221.

Preferably, it may further comprise a reduction gear 600, wherein the reduction gear 600, the eccentric cam 222, and the drive gear 211 may be arranged in such sequence along an axis of the drive spindle 240, and a drive shaft of the driving mechanism 230 may be drivingly connected with the reduction gear 600.

Preferably, it may further comprise a control panel, and the control panel may be in signal connection with the driving mechanism 230.

An electric jack is characterized by comprising the lifting device 100 and a jacking mechanism 900; the jacking mechanism 900 is connected with the lifting device 100, the lifting device 100 is configured to drive the jacking mechanism 900 to perform lifting and lowering.

A press is characterized by comprising the lifting device 100 and a pressure block 910; the lifting oil cylinder 110 is provided with a piston rod that is liftable; the piston rod is connected with the pressure block 910.

A crane is characterized by comprising the lifting device 100 and a boom 920; the lifting oil cylinder 110 is provided with a piston rod that is liftable; the boom 920 is provided with a hook 930, the boom 920 is connected with the piston rod.

A tire mounting/dismounting and transport apparatus is characterized by comprising the lifting device 100 and a tire V-block, the lifting oil cylinder 110 is provided with a piston rod, and the tire V-block is connected with the piston rod.

The oil circuit system, the lifting device, the electric jack, the press, the crane, and the tire mounting/dismounting and transport apparatus of the disclosure have advantages as follows. The oil circuit system of the lifting device comprises the gear pump assembly and the plunger pump assembly, wherein the gear pump assembly can pump the hydraulic oil with large displacement but low pressure into the lifting oil cylinder of the lifting device, and the plunger pump assembly can pump the hydraulic oil with small displacement but high pressure into the lifting oil cylinder of the lifting device. Under no-load or low-pressure conditions of the lifting device, the gear pump assembly can quickly pump a larger volume of low-pressure hydraulic oil, enabling quick lifting or lowering of the lifting device. It solves the problem of low displacement speed under no-load low-pressure conditions of the hydraulic lifting pumps in the art, improving user experience; Under high-pressure conditions of the hydraulic lifting pump, the plunger pump assembly can quickly pump higher pressure hydraulic oil to the lifting oil cylinder to enable slow lifting or lowering, whereby the lifting device can have slow displacement to meet user's normal operational requirements.

Further aspects and advantages of the present invention will be illustratively explained in the following description, or apparent from the following description, or conceivable through practice of the present invention.

### BRIEF DESCRIPTION OF THE DRAWINGS

FIG.1 is a structural schematic view of a multi-section vertical jack according to an embodiment of the disclosure;
FIG.2 is a structural schematic view illustrating a lifting oil cylinder and a hydraulic pump are combined according to an embodiment of the disclosure;
FIG.3 is a schematic cross-sectional view of a gear pump assembly and a plunger pump assembly of a hydraulic pump according to an embodiment of the disclosure;
FIG.4 is a schematic view of an oil circuit system according to an embodiment of the disclosure;
FIG.5 is a view illustrating a flowing direction of hydraulic oil when a driving mechanism is rotated in a forward direction under no-load or low-pressure lifting conditions of a lifting oil cylinder according to an embodiment of the disclosure;
FIG.6 is a view illustrating a flowing direction of hydraulic oil when a driving mechanism is rotated in a forward direction under high-pressure lifting conditions of a lifting oil cylinder according to an embodiment of the disclosure;
FIG.7 is a view illustrating a flowing direction of hydraulic oil when a driving mechanism is rotated in a reverse direction and a lifting oil cylinder is in a lowering condition according to an embodiment of the disclosure;
FIG.8 is a structural schematic view of a gear pump assembly according to an embodiment of the disclosure;
FIG.9 is a structural schematic view of a pressure relief line according to an embodiment of the disclosure;
FIG.10 is a first structural schematic view of a communication cavity of a 4-Way, 2-Position valve according to an embodiment of the disclosure;
FIG.11 is a second structural schematic view of a communication cavity of a 4-Way, 2-Position valve according to an embodiment of the disclosure;
FIG.12 is a schematic view illustrating cross-sections of a 4-Way, 2-Position valve and a first one-way valve according to an embodiment of the disclosure;
FIG.13 is a structural schematic view of a hydraulic pump according to an embodiment of the disclosure;
FIG.14 is a structural schematic view of a scissor jack according to an embodiment of the disclosure;
FIG.15 is a structural schematic view of a horizontal jack according to an embodiment of the disclosure;
FIG.16 is a schematic exploded view of a horizontal jack according to an embodiment of the disclosure;
FIG.17 is a structural schematic view of a trench jack according to an embodiment of the disclosure;
FIG.18 is a structural schematic view of a transport jack according to an embodiment of the disclosure;
FIG.19 is a structural schematic view of a press according to an embodiment of the disclosure;
FIG.20 is a structural schematic view of a crane according to an embodiment of the disclosure;
FIG.21 is a structural schematic view of a tire mounting/dismounting and transport apparatus according to an embodiment of the disclosure;

In the drawings, 100. lifting device; 110. lifting oil cylinder; 200. hydraulic pump; 210. gear pump assembly; 211. drive gear; 212. driven gear; 213. gear oil chamber; 214. first inlet/outlet port; 215. second inlet/outlet port; 220. plunger pump assembly; 221. oil inlet plunger; 222. eccentric cam; 223. rotating bearing; 230. driving mechanism; 240. drive spindle; 250. pump body; 251. first oil inlet; 252. first oil feed line; 2521. first oil outlet; 253. second oil feed line; 2531. second one-way valve; 2532. third one-way valve; 2533. second oil inlet; 2534. second oil outlet; 254. oil inlet/outlet line; 2542. main section; 2543. first one-way valve; 2544. pressure-maintaining one-way steel ball; 2545. first spring; 2546. valve seat; 2547. first pass-through hole; 2548. second pass-through hole; 2549. second spring; 255. pressure relief line; 256. oil return line; 2561. first overflow port; 2562. second overflow port; 257. emergency oil line; 2572. normally-closed shut-off valve; 260. main oil inlet port; 270. main inlet/outlet port; 280. main return port; 300. 4-Way, 2-Position valve; 310. communication cavity; 311. oil pass-through cavity; 312. oil pressure relief cavity; 320. pressure relief piston; 321. push rod; 322. third spring; 400. first overflow valve; 500. second overflow valve; 600. reduction gear; 700. support base; 800. tank; 900. jacking mechanism; 910. pressure block; 920. boom; 930. hook.

### DETAILED DESCRIPTION OF ILLUSTRATED EMBODIMENTS

The embodiments of the present disclosure are described below in detail, and some examples of the embodiments are illustrated in the accompanying drawings. The same or similar reference numerals used through the text refer to the same or similar elements or the elements with the same or similar functions. The embodiments described below with reference to the accompanying drawings are illustrative and for purposes of explanation rather than limitation.

It should be understood that the terms, such as "upper", "lower", "front", "rear", "left", and "right", related to the position and orientation relationships as used in the description, refer to position and orientation relationships as shown in the drawings for convenience of description and for the purpose of simplicity. They are not intended to indicate or hint a limitation in terms of specific orientation or configuration and operation with specific orientation to the described device or element, and should not be considered as a limitation to the present disclosure.

In the description, the term "several" refers to one or more, the term "plurality" refers to two or more, the terms such as "greater than", "less than", and "exceed" are construed as excluding the number itself, and the terms such as "above", "below", and "within" are construed as including the number itself. The terms "first" and "second", if used herein, are intended to distinguish the elements from one another and are not intended to indicate or hint relative importance or imply the quantity of elements or imply the precedence relationship of elements.

Unless defined otherwise, the terms such as "dispose", "mount" and "connect" used in the description are intended to have meanings commonly understood in a broad sense. The particular meanings of the terms used herein can be reasonably determined by those skilled in the art in accordance with specific conditions of the technical solutions.

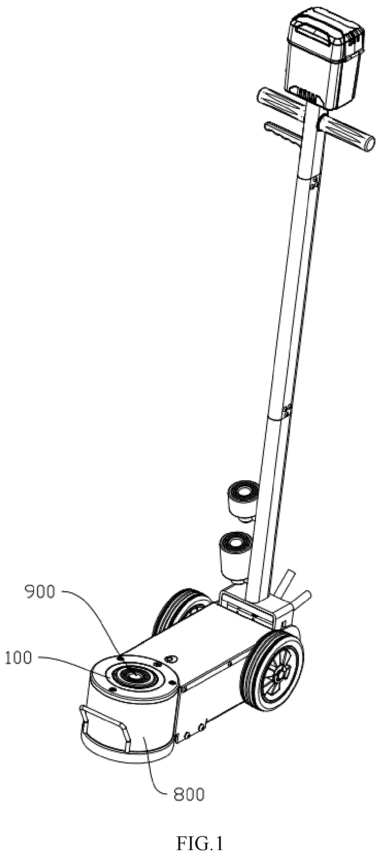

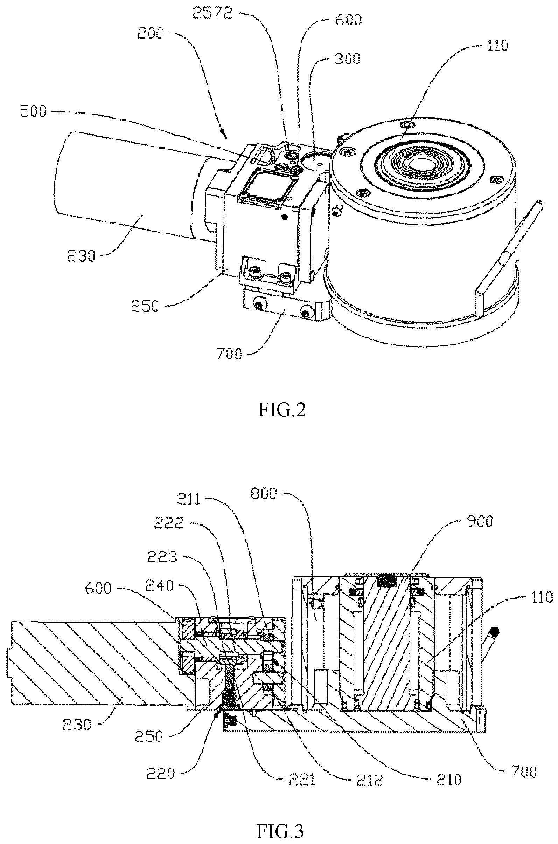

Please refer to FIGs.1-7 together. An oil circuit system of a lifting device according to an embodiment of the disclosure is described below.

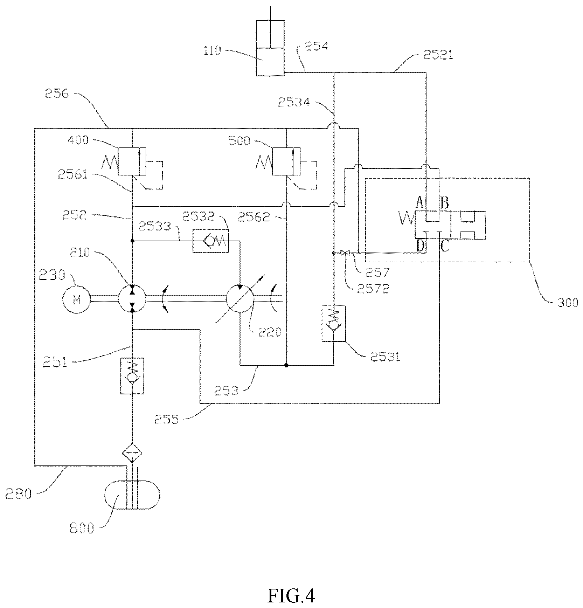

Referring to FIG.4, the oil circuit system of the lifting device in the embodiment comprises: the lifting oil cylinder 110, the tank 800, the first oil feed line 252, the second oil feed line 253, the oil return line 256, the 4-Way, 2-Position valve 300, and the first overflow valve 400;
The first oil feed line 252 is provided with the first oil inlet 251, the gear pump assembly 210, and the first oil outlet 2521, which are connected in such sequence along a first oil inlet direction through a pipeline, and the first oil inlet 251 is connected with the tank 800; The gear pump assembly 210 is configured to provide the power for oil intake in the first oil feed line 252 and output the hydraulic oil to the lifting oil cylinder 110. It can quickly pump a large displacement of low-pressure hydraulic oil to enable the lifting oil cylinder 110 to perform lifting or lowering quickly;
The second oil feed line 253 is provided with the second oil inlet 2533, the plunger pump assembly 220, the second one-way valve 2531, and the second oil outlet 2534, which are connected in such sequence along a second oil inlet direction through a pipeline, and the second oil inlet 2533 is connected to the pipeline between the gear pump assembly 210 and the 4-Way, 2-Position valve 300; the plunger pump assembly 220 is configured to provide the power for oil intake in the second oil feed line 253 and output the hydraulic oil to the lifting oil cylinder 110. It can pump a small displacement of high-pressure hydraulic oil to enable the lifting oil cylinder 110 to perform lifting or lowering slowly; the second one-way valve 2531 serves to prevent the hydraulic oil pumped into the lifting oil cylinder 110 from flowing reversely along the second oil feed line 253, thereby ensuring that the hydraulic oil remains in the lifting oil cylinder 110.

An oil inlet/outlet line 254 is provided, which has one end connected with the first oil outlet 2521 and the second oil outlet 2534, and the other end connected with the lifting oil cylinder 110.

A pressure relief line 255 is provided, which has an inlet port connected to the pipeline between the gear pump assembly 210 and the first oil inlet 251, and an outlet port connected with the 4-Way, 2-Position valve 300.

An oil return line 256 is provided, which has an inlet port connected with the 4-Way, 2-Position valve 300 and an outlet port connected with the tank 800 via the main return port 280. The first overflow port 2561 and the main return port 280 are further provided, which are sequentially connected through a pipeline. The first overflow port 2561 is connected to the pipeline between the gear pump assembly 210 and the 4-Way, 2-Position valve 300, and the first overflow valve 400 has an outlet port connected with the oil return line 256. That is, in the event of over pressure of the oil line between the gear pump assembly and the 4-Way, 2-Position valve 300, the hydraulic oil can flow into the oil return line 256 through the first overflow port 2561 and the first overflow valve 400, and then return into the tank 800 through the main return port 280, thereby enabling relief of excessive pressure of the oil line.

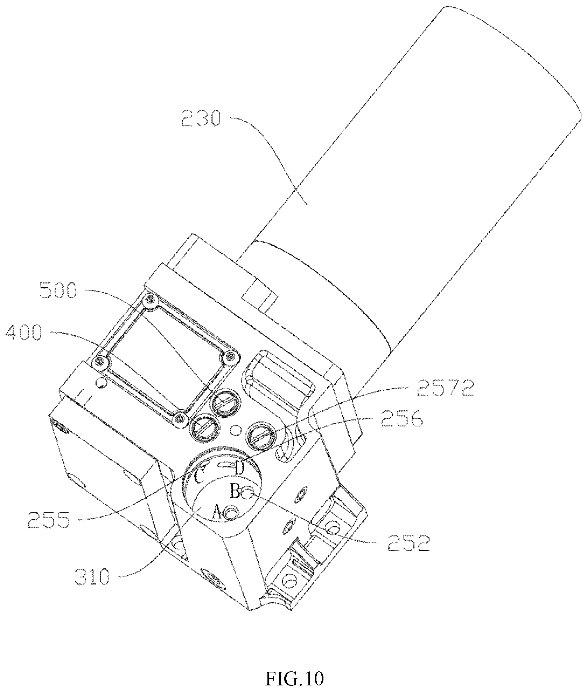

Referring to FIGs.4-7 and 10-12, the 4-Way, 2-Position valve 300 has a port A, a port B, a port C, and a port D, wherein the port A is connected with the first oil outlet 2521, the port B is connected with the first oil feed line 252, the port C is connected with the pressure relief line 255, the port D is connected with the oil return line 256, and the port D constitutes the oil return port.

When the gear pump assembly 210 is rotated in the forward direction, the 4-Way, 2-Position valve 300 is in the first position, where the port A is in communication with the port B, the port C and the port D are not in communication with each other, and the lifting oil cylinder 110 is in the lifted state.

When the gear pump assembly 210 is rotated in the reverse direction, the 4-Way, 2-Position valve 300 is in the second position, where the port A is in communication with the port B, and the port C is in communication with the port D, and the lifting oil cylinder 110 is in the lowered state.

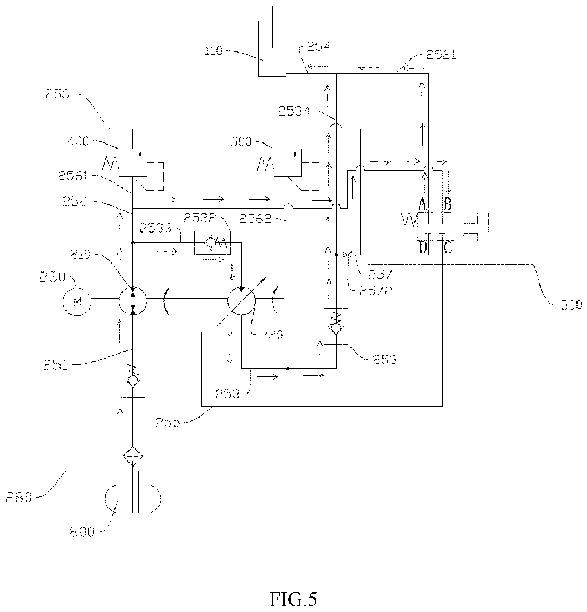

Referring to FIG.5, if the lifting oil cylinder 110 requires oil intake, both the gear pump assembly 210 and the plunger pump assembly 220 are operated to supply oil to the lifting oil cylinder 110 through two oil lines; As the gear pump assembly 210 can pump a large displacement of low-pressure hydraulic oil into the lifting oil cylinder 110 and the plunger pump assembly 220 can pump a small displacement of high-pressure hydraulic oil into the lifting oil cylinder 110 of the lifting device 100, when the lifting oil cylinder 110 is in a no-load or low-pressure state (in which the low oil pressure inside the lifting oil cylinder is less than the oil inlet pressure of the gear pump assembly 210), the oil inlet pressure of the gear pump assembly 210 is greater than the oil pressure inside the lifting oil cylinder 110. In such a case, both the first oil feed line 252 and the second oil feed line 253 can deliver the hydraulic oil into the lifting oil cylinder 110 to ensure that the oil intake volume of the lifting oil cylinder 110 is sufficient to enable the piston of the lifting oil cylinder 110 to move upwards or downwards quickly.

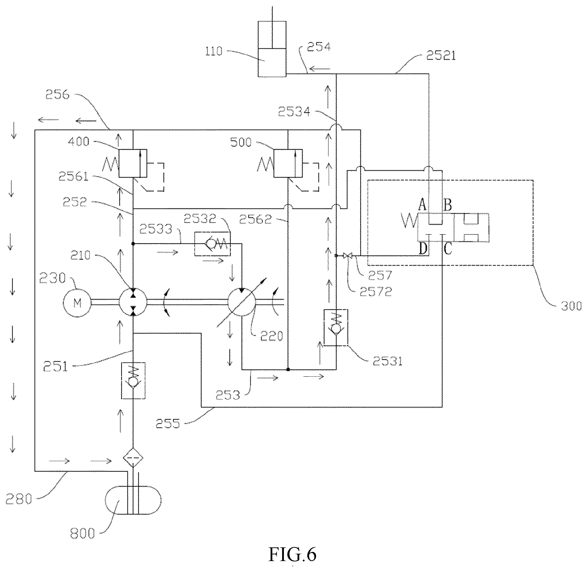

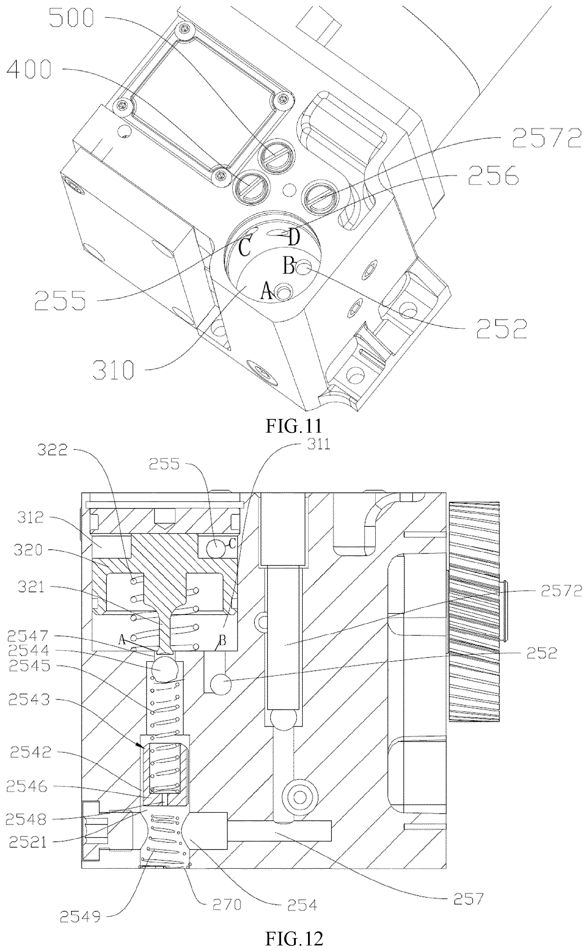

Referring to FIG.6, when the lifting oil cylinder 110 is in a high-pressure state (in which the high oil pressure inside the lifting oil cylinder is greater than the oil inlet pressure of the gear pump assembly 210 but lower than the oil inlet pressure of the plunger pump assembly), the hydraulic oil output from the gear pump assembly 210 cannot be delivered into the lifting oil cylinder 110 as the oil pressure of the lifting oil cylinder 110 is greater than the oil inlet pressure of the gear pump assembly 210. In such a case, the hydraulic oil that is overflowed will flow through the first overflow valve 400 into the oil return line 256 and return into the tank 800; Meanwhile, as the oil outlet pressure of the plunger pump assembly 220 is greater than the oil pressure of the lifting oil cylinder 110, the second oil feed line 253 still can deliver the high-pressure hydraulic oil into the lifting oil cylinder 110, thereby enabling the piston of the lifting oil cylinder 110 to move upwards or downwards slowly. In this way, it can gradually increase the stroke of the lifting oil cylinder 110 to meet the user's requirements for lifting or lowering objects. Referring to FIG.12, the first one-way valve 2543 is provided, which is located at the oil line between the first oil outlet 2521 and the 4-Way, 2-Position valve 300. The first one-way valve 2543 serves to prevent the hydraulic oil pumped into the lifting oil cylinder 110 from flowing reversely along the first oil feed line 252, thereby ensuring that the hydraulic oil remains in the lifting oil cylinder 110. The 4-Way, 2-Position valve 300 serves to actuate the first check valve 2543 to open, thereby allowing the hydraulic oil to return from the first oil outlet 2521 to the gear pump assembly 210.

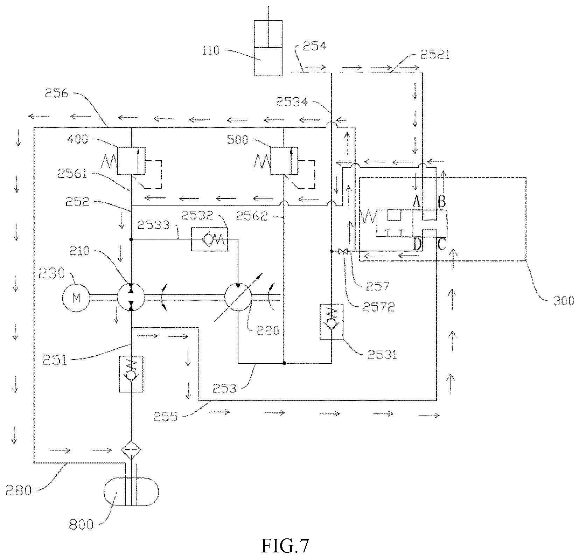

Referring to FIG.7, when the lifting oil cylinder 110 needs to relief pressure, the gear pump assembly 210 can be rotated in the reverse direction to open the first one-way valve 2543 by the 4-Way, 2-Position valve 300. In such a case, the gear pump assembly 210 can pump the hydraulic oil in the lifting oil cylinder 110 towards the inlet port of the pressure relief line 255, to enable the hydraulic oil to flow back to the tank 800 from the pressure relief line 255 through the oil return line 256, thereby achieving the purpose of quickly discharging the oil from the lifting oil cylinder 110.

In some embodiments of the disclosure, the 4-Way, 2-Position valve 300 is provided with a communication cavity 310, a pressure relief piston 320, and a third spring 322. The communication cavity 310 is divided into an oil pass-through cavity 311 and an oil pressure relief cavity 312 by the pressure relief piston 320. The port A and the port B are located in the oil pass-through cavity 311, and the port C and the port D are located in the oil pressure relief cavity 312. The oil pressure relief cavity 312 is in communication with the pressure relief line 255 through the port C and with the oil return line 256 through the port D, and the oil pass-through cavity 311 is in communication with the first oil outlet 2521 through the port A and with the first oil feed line 252 through the port B; The third spring 322 in its normal state biases the pressure relief piston 320 to keep the port D sealed by the pressure relief piston 320 such that the port C and the port D of the 4-Way, 2-Position valve 300 are not in communication;
The pressure relief piston 320 is provided with a push rod 321 for opening the first one-way valve 2543;
Herein, the oil pass-through cavity 311 is located at a pipeline between the first one-way valve 2543 and the gear pump assembly 210. The first one-way valve 2543 is in communication with the oil pass-through cavity 311 through the port A, and the first oil feed line 252 is in communication with the oil pass-through cavity 311;
When the gear pump assembly 210 is rotated in the forward direction to pump the hydraulic oil to the oil pass-through cavity 311, the first one-way valve 2543, and the first oil outlet 2521, the port D is kept sealed by the pressure relief piston 320;
When the gear pump assembly 210 is rotated in the reverse direction to pump the hydraulic oil from the oil pass-through cavity 311 to the oil pressure relief cavity 312, the hydraulic oil in the oil pressure relief cavity 312 pushes the pressure relief piston 320 to move downwards to open the port D, such that the port C and the port D of the 4-Way, 2-Position valve 300 are in communication with each other, and the pressure relief line 255 is in communication with the tank 800 through the oil pressure relief cavity 312 and the oil return line 256. Meanwhile, the pressure relief piston 320 is moved downwards to open the first one-way valve 2543 by the push rod 321, allowing the gear pump assembly 210 to pump the hydraulic oil in the lifting oil cylinder 110 to the inlet port of the pressure relief line 255, and then sequentially through the port C of the 4-Way, 2-Position valve 300, the port D of the 4-Way, 2-Position valve 300, and the oil return line 256, and back to the tank 800.

Referring to FIG.5, when the gear pump assembly 210 is rotated in the forward direction, it can pump the hydraulic oil to the oil pass-through cavity 311, the first one-way valve 2543, and the first oil outlet 2521, thereby achieving the purpose of supplying oil for the lifting oil cylinder 110; When the gear pump assembly 210 is rotated in the reverse direction, it pumps the hydraulic oil from the oil pass-through cavity 311 to the pressure relief line 255 through the first oil feed line 252, and then to the oil pressure relief cavity 312. It causes an increase in the volume of the oil pressure relief cavity 312 and leads to the movement of the pressure relief piston 320 to decrease the volume of the oil pass-through cavity 311. Furthermore, it enables the push rod 321 of the pressure relief piston 320 to open the first one-way valve 2543, allowing the hydraulic oil of the lifting oil cylinder 110 to flow back to the oil pass-through cavity 311 via the first one-way valve 2543; Subsequently, as the oil pressure relief cavity 312 gradually becomes larger, the pressure relief piston 320 moves to a position where the port D is opened, such that the hydraulic oil in the oil pressure relief cavity 312 can return to the tank 800 through the port D and the oil return line 256. In this way, when the gear pump assembly 210 is rotated in the reverse direction, the hydraulic oil in the lifting oil cylinder 110 can flow back to the tank 800 through the first one-way valve 2543, the oil pass-through cavity 311, the first oil feed line 252, the gear pump assembly 210, the pressure relief line 255, the oil pressure relief cavity 312, and the oil return line 256, thereby achieving the purpose of quick pressure relief and oil return.

It should be noted that, in order to close the port D by the pressure relief piston 320 in the normal state, the third spring 322 is provided to bias the pressure relief piston 320 from the oil pass-through cavity 311 toward the oil pressure relief cavity 312, such that when the gear pump assembly 210 stops operating, the pressure relief piston 320 can be automatically reset to the state in which the port D is closed.

In addition, a switching valve may be provided to achieve communication between the oil return line 256 and the lifting oil cylinder 110. When the switching valve is open, the oil return line 256 is communicated with the lifting oil cylinder 110, allowing the hydraulic oil in the lifting oil cylinder 110 to enter the oil return line 256. Thus, the hydraulic oil in the lifting oil cylinder 110 can release pressure and return to the tank 800.

In some embodiments of the disclosure, the oil circuit system of the lifting device further comprises the oil inlet/outlet line 254 which is connected with the first oil outlet 2521 and the second oil outlet 2534, and the oil inlet/outlet line 254 is connected with the lifting oil cylinder 110. That is, the first oil feed line 252 and the second oil feed line 253 converge at the oil inlet/outlet line 254, such that both the hydraulic oil pumped from the first oil feed line 252 and the hydraulic oil pumped from the second oil feed line 253 are delivered to the lifting oil cylinder 110 through the oil inlet/outlet line 254.

In some embodiments of the disclosure, the oil circuit system of the lifting device further comprises an emergency oil line 257. The inlet port of the emergency oil line 257 is connected with the oil inlet/outlet line 254, the outlet port of the emergency oil line 257 is connected the tank 800, and the emergency oil line 257 is provided with a normally-closed shut-off valve 2572. In order to prevent excessively high oil pressure within the lifting oil cylinder 110 in the event of a malfunction during the operation of the lifting oil cylinder 110, the normally-closed shut-off valve 2572 can be opened to allow the hydraulic oil in the lifting oil cylinder 110 to flow back to the tank 800 through the oil inlet/outlet line 254 and the emergency oil line 257, thereby achieving the purpose of relieving the pressure for the lifting oil cylinder 110 and ensuring safe operation.

In some embodiments of the disclosure, in order to prevent excessively high pressure in the second oil feed line 253, the second overflow port 2562 and the second overflow valve 500 are further provided, which are sequentially connected through a pipeline; The overflow outlet port of the second overflow valve 500 is connected with the tank 800 through the oil return line 256, and the inlet port of the second overflow port 2562 is connected with a pipeline between the plunger pump assembly 220 and the second oil outlet 2534. In the event of over pressure in the second oil feed line 253, the second overflow valve 500 will be opened, to allow the oil pumped by the plunger pump assembly 220 to be delivered from the second overflow valve 500 to the tank 800, thereby prevent excessively high pressure in the second oil feed line 253 and ensuring safe operation.

In some embodiments of the disclosure, the oil circuit system of the lifting device further comprises the third one-way valve 2532; the third one-way valve 2532 is provided on the pipeline between the second oil inlet 2533 and the plunger pump assembly 220. The third one-way valve 2532 can prevent the hydraulic oil from flowing back from the pipeline of the plunger pump assembly 220 to the gear pump assembly 210, thereby ensuring that the plunger pump assembly 220 normally pumps hydraulic oil into the lifting oil cylinder 110.

In some embodiments of the disclosure, referring to FIGs.1-3, a lifting device 100 is further provided in the embodiment. The lifting device 100 comprises the above-mentioned oil circuit system for the lifting device. The lifting device 100 can achieve oil intake by driving the gear pump assembly 210 and the plunger pump assembly 220. The lifting oil cylinder 110 of the lifting device 100 can be driven to perform lifting or lowering by using a cylinder rod or a telescopic rod.

Referring to FIGs.1-3, the oil circuit system of the lifting device 100 in the embodiment comprises the gear pump assembly 210 and the plunger pump assembly 220. The gear pump assembly 210 can pump a large displacement of low-pressure hydraulic oil into the lifting oil cylinder 110 of the lifting device 100, and the plunger pump assembly 220 can pump a small displacement of high-pressure hydraulic oil into the lifting oil cylinder 110 of the lifting device 100; When the lifting device 100 is in a no-load or low-pressure condition, the gear pump assembly 210 can quickly pump in a relatively large volume of low-pressure hydraulic oil, to enable the lifting device 100 to quickly rise or descend, thereby solving the problem of existing hydraulic lifting pumps having a low rising speed under no-load low-pressure conditions and improving user experience. When the hydraulic lifting pump is under a high-pressure condition, the plunger pump assembly 220 can pump high-pressure hydraulic oil into the lifting oil cylinder 110 to slowly elevate the height of the lifting device 100, meeting user's normal operational requirements.

In some embodiments of the disclosure, referring to FIGs.1-3, the lifting device 100 further comprises the hydraulic pump 200 and a driving mechanism 230; The hydraulic pump 200 further comprises a drive spindle 240 and the pump body 250; The first oil feed line 252, the second oil feed line 253, and the oil return line 256 are all provided on the pump body 250; The gear pump assembly 210 comprises the drive gear 211 and the driven gear 212 which are engaged with each other; The plunger pump assembly 220 comprises the oil inlet plunger 221 and the eccentric cam 222, and the telescopic end of the oil inlet plunger 221 abuts against the outer side of the eccentric cam 222; The drive spindle 240 is disposed in the pump body 250 and rotatably connected with the pump body 250; Both the drive gear 211 and the eccentric cam 222 are fixedly connected to the drive spindle 240; The driving mechanism 230 serves to drive the drive spindle 240 to rotate, thereby driving the eccentric cam 222 to drive the telescopic end of the oil inlet plunger 221 to perform reciprocating extension and retraction and driving the drive gear 211 and the driven gear 212 to rotate.

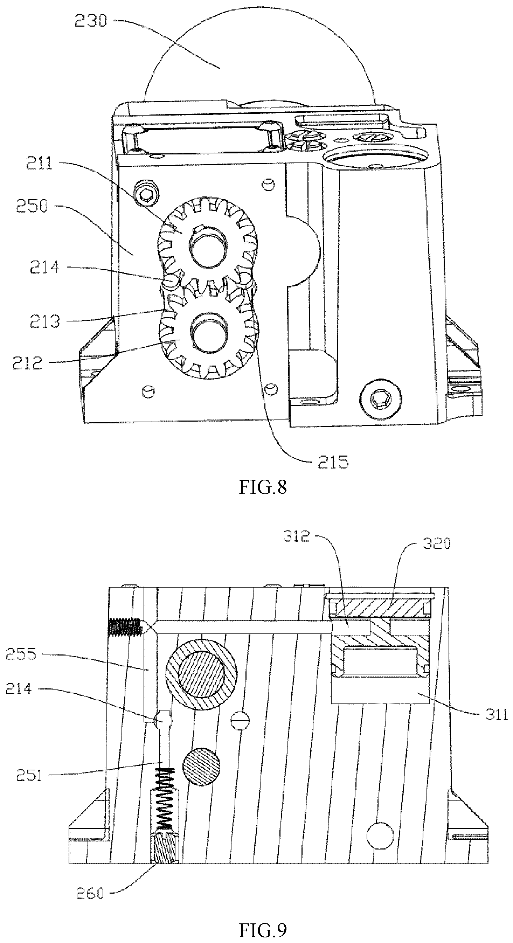

The hydraulic pump 200 mainly serves to accommodate the oil lines and drive the rotation of the eccentric cam 222 and the drive gear 211. The driving mechanism 230 may be a drive motor that drives the drive spindle 240 to rotate in the forward and reverse directions and thus drives the gear pump assembly 210 to rotate in the forward and reverse directions, thereby facilitating the oil intake and discharge of the lifting oil cylinder 110. Referring to FIG.8, a gear oil chamber 213 is provided in the pump body 250. Both the drive gear 211 and the driven gear 212 are located in the gear oil chamber 213. The gear oil chamber 213 is located at the pipeline between the first oil inlet 251 and the 4-Way, 2-Position valve 300. The driven gear 212 is rotatably connected with the pump body 250. The gear oil chamber 213 is provided with the first inlet/outlet port 214 and the second inlet/outlet port 215, and the gear oil chamber 213 is connected with the 4-Way, 2-Position valve 300 via the second inlet/outlet port 215 and with the first oil inlet 251 via the first inlet/outlet port 214. The drive gear 211 and the driven gear 212 are engaged with each other to pump the hydraulic oil towards the first inlet/outlet port 214 or the second inlet/outlet port 215. When the driving mechanism 230 is rotated in the forward direction, the drive gear 211 is rotated in the forward direction, such that the hydraulic oil can be pumped from the first inlet/outlet port 214 to the second inlet/outlet port 215 and then to the lifting oil cylinder 110 via the 4-Way, 2-Position valve 300. When the driving mechanism 230 is rotated in the reverse direction, the drive gear 211 is rotated in the reverse direction, such that the hydraulic oil can be pumped from the second inlet/outlet port 215 to the first inlet/outlet port 214, to facilitate pressure relief.

Both the eccentric cam 222 and the drive gear 211 are provided on the drive spindle 240, such that the eccentric cam 222 and the drive gear 211 can synchronously rotate, allowing the single driving mechanism 230 to control the movements of two pumps. The oil inlet plunger 221 is slidably connected to the pump body 250, and is biased towards the eccentric cam 222 by a spring, to ensure that the telescopic end of the oil inlet plunger 221 abuts against the eccentric cam 222. Thus, the eccentric cam 222 and the oil inlet plunger 221 constitutes a crank-rocker mechanism. Consequently, no matter the drive spindle 240 is rotated in the forward direction or the reverse direction, the oil inlet plunger 221 can be driven to move back and forth, thereby allowing the second oil feed line 253 to supply oil to the lifting oil cylinder 110. However, since the displacement of the gear pump assembly 210 is significantly greater than that of the plunger pump assembly 220, the oil discharge volume of the gear pump assembly 210 is significantly greater than the oil intake volume of the plunger pump assembly 220 when the driving mechanism 230 is rotated in the reverse direction. Thus, it can achieve the purpose of pressure relief and oil discharge for the lifting oil cylinder 110.

In some embodiments of the disclosure, referring to FIGs.1-3, a rotating bearing 223 is sleeved on the outer side of the eccentric cam 222. The rotating bearing 223 abuts against the telescopic end of the oil inlet plunger 221. That is, the outer surface of the eccentric cam 222 abuts against the oil inlet plunger 221 via the rotating bearing 223. Due to the rotating bearing 223, the kinetic friction between the eccentric cam 222 and the oil inlet plunger 221 can be reduced, thereby allowing the eccentric cam 222 to drive the oil inlet plunger 221 to perform reciprocating extension and retraction more smoothly and facilitate oil intake.

In some embodiments of the disclosure, referring to FIGs.1-3, the lifting device 100 further comprises the reduction gear 600. The reduction gear 600, the eccentric cam 222, and the drive gear 211 are arranged in such sequence along the axis of the drive spindle 240. The drive shaft of the driving mechanism 230 is drivingly connected with the reduction gear 600. The driving mechanism 230 may be a drive motor, which is drivingly connected to the reduction gear 600 through a gear, to adjust the rotational speed of the drive spindle 240 and thus adjust the oil intake volumes of the gear pump assembly 210 and the plunger pump assembly 220.

In some embodiments of the disclosure, the lifting device 100 further comprises a control panel, and the control panel is in signal connection with the driving mechanism 230. The control panel can be connected to the driving mechanism 230 via wired signals or wireless signals. Wired signals may be transmitted by using wires, and wireless signals may transmitted by using wireless signal connections such as Wi-Fi or Bluetooth^{™}, thereby allowing the control panel to control on and off of the driving mechanism 230, the rotation of the drive spindle 240 in forward or reverse direction, the rotational speed, etc.

In some embodiments of the disclosure, referring to FIGs.1-3, the hydraulic pump 200 can be connected to the lifting oil cylinder 110 and the tank 800 via a support base 700. The hydraulic pump 200, the lifting oil cylinder 110, and the tank 800 are all mounted on the support base 700, and the support base 700 is provided with pipelines. The pump body 250 of the hydraulic pump 200 is provided with a main oil inlet port 260, a main inlet/outlet port 270, and a main return port 280, wherein the main oil inlet port 260 and the main return port 280 are connected with the tank 800 through the pipelines of the support base 700; and the main inlet/outlet port 270 is connected the lifting oil cylinder 110 through the pipelines of the support base 700.

In some embodiments of the disclosure, referring to FIG.12, the pump body 250 includes a main section 2542 for accommodating the first one-way valve 2543. The main section 2542 is in communication with the first oil outlet 2521, and the main section 2542 is provided with a first pass-through hole 2547 in communication with the oil pass-through cavity 311. The first one-way valve 2543 comprises a pressure-maintaining one-way steel ball 2544, a first spring 2545, and a valve seat 2546; The first spring 2545 has one end abutting against the valve seat 2546 and the other end abutting against the pressure-maintaining one-way steel ball 2544. The first spring 2545 serves to drive the pressure-maintaining one-way steel ball 2544 to seal the first pass-through hole 2547; When the drive spindle 240 is rotated in the reverse direction, the push rod 321 of the pressure relief piston 320 extends into the first pass-through hole 2547 and pushes the pressure-maintaining one-way steel ball 2544 to move towards the valve seat 2546 to open the port A, thereby allowing the hydraulic oil to flow through the first one-way valve 2543 to the port A. The pressure-maintaining one-way steel ball 2544, the first spring 2545, and the valve seat 2546 are arranged in such sequence along the extending direction of the main section 2542. The valve seat 2546 is provided with a second pass-through hole 2548 in communication with the first oil outlet 2521. The valve seat 2546 is slidably connected to the inner wall of the main section 2542. A second spring 2549 is provided on the side of the valve seat 2546 away from the first spring 2545. The second spring 2549 has one end abutting against the valve seat 2546 and the other end abutting against the pump body 250. The elastic coefficient of the second spring 2549 is greater than that of the first spring 2545. The second spring 2549 can ensure that the valve seat 2546 is positioned within the main section 2542. An oil pass-through gap may be defined between the valve seat 2546 and the inner wall of the main section 2542, to increase the oil pass-through cross - sectional area of the main section 2542 at the valve seat 2546 and ensure that the hydraulic oil can flow through the main section 2542.

An electric jack is provided in the embodiment, which comprises the lifting device as described above and a jacking mechanism 900 connected with the lifting device 100. The lifting device 100 c drive the lifting and lowering motions of the jacking mechanism 900, and the lifting oil cylinder 110 of the lifting device 100 can drive the lifting and lowering motions of the jacking mechanism 900. Herein, various electric jacks, such as scissor jacks, horizontal jacks, trench jacks, transport jacks, and multi-section vertical jacks, may be provided.

Herein, the structure of a multi-section vertical jack is as shown in FIG.1, wherein the lifting oil cylinder 110 is an oil cylinder equipped with multi sections of telescopic rods, wherein the telescopic rods are driven to extend upwards to support the object when the hydraulic oil is delivered into the lifting oil cylinder 110, and the telescopic rods are lowered back to their original positions when the lifting oil cylinder 110 releases pressure.

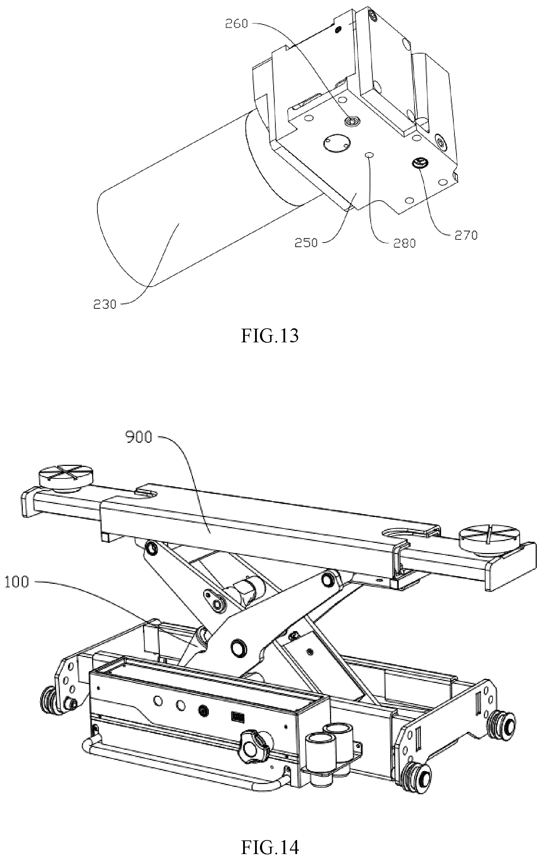

The structure of a scissor jack is as shown in FIG.14, wherein the jacking mechanism 900 is a scissor lifting frame, and the lifting device 100 can drive the scissor lifting frame to perform lifting and lowering, thereby achieving the purpose of lifting and lowering.

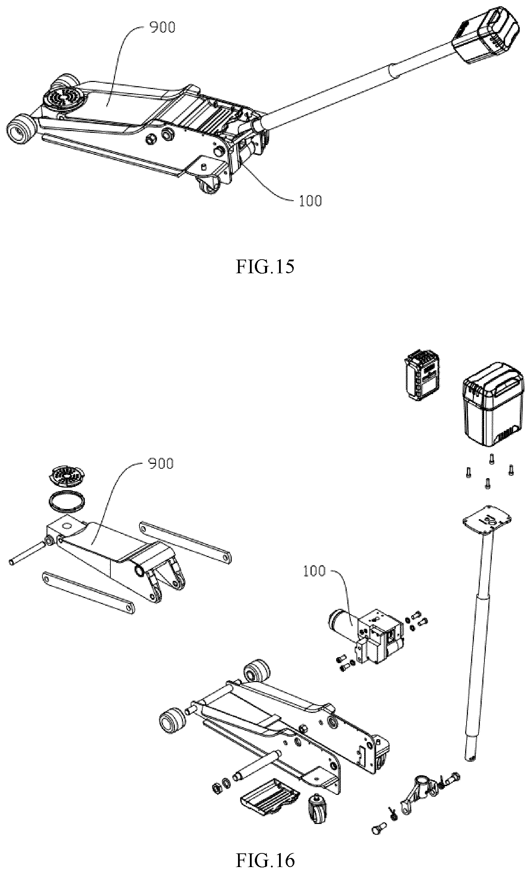

The structure of a horizontal jack is as shown in FIGs.15 and 16, wherein the jacking mechanism 900 is a horizontal lifting frame, and the lifting device 100 can drive the horizontal lifting frame to perform lifting and lowering, thereby enabling objects placed on the horizontal lifting frame to be lifted or lowered.

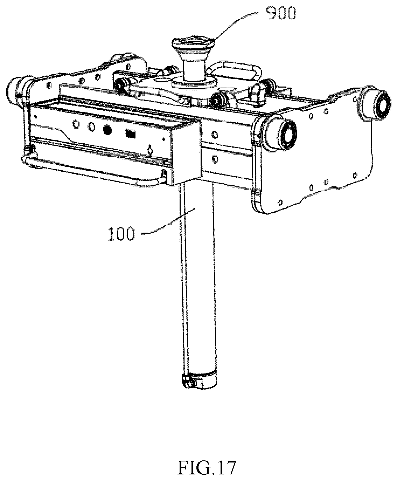

The structure of a trench jack is as shown in FIG.17, wherein the support frame of the trench jack is fixed in a trench, allowing for a significant increase in the stroke of the lifting device 100. The jacking mechanism 900 can be mounted on the top portion of the lifting device 100, allowing the lifting device 100 to directly drive the jacking mechanism 900 to perform lifting and lowering, thereby achieving the purpose of lifting and lowering objects.

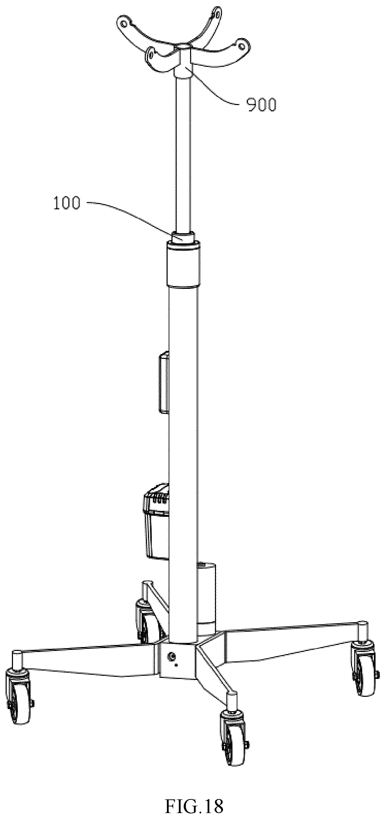

The structure of a transport jack is as shown in FIG.18, wherein the jacking mechanism 900 of the transport jack is a jacking gripper for supporting and fixing objects. Furthermore, the transport jack is provided at a bottom portion with casters to facilitate convenient transportation of objects. The lifting device 100 can drive the jacking mechanism 900 to perform lifting and lowering, thereby adjusting the height of the object to be transported.

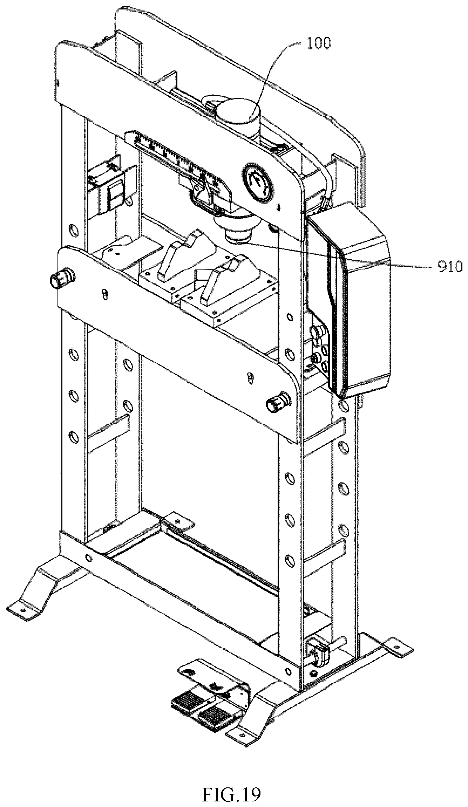

Referring to FIG.19, a press is further provided in the embodiment, which comprises the lifting device 100 as described above and a pressure block 910. The lifting oil cylinder 110 is provided with a piston rod which is liftable and is connected with the pressure block 910. As shown in the drawings, the press is provided with a gantry frame, the lifting device 100 is located at the top portion of the gantry frame, the piston rod of the lifting device 100 and the pressure block 910 are positioned at the bottom portion of the lifting device 100 to press against a support frame on the press.

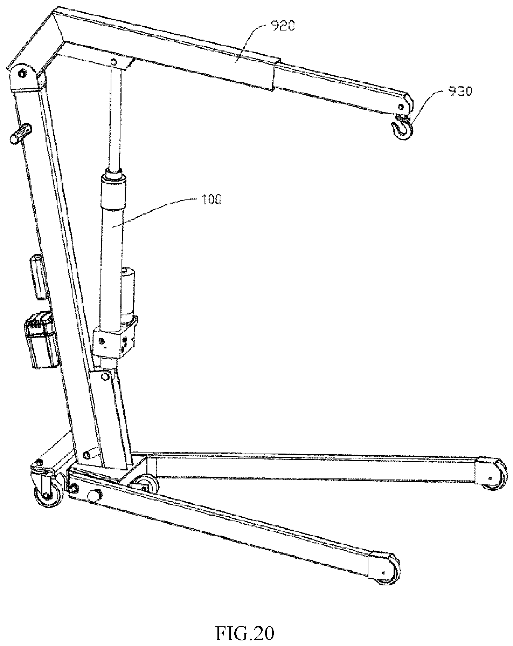

Referring to FIG.20, the crane is further provided in the embodiment, which comprises the lifting device 100 as described above and a boom 920. The lifting oil cylinder 110 is provided with a piston rod which is liftable, the boom 920 is provided with a hook 930, and the piston rod is connected with the boom 920. The hook 930 serves to hook the objects that need to be lifted. The lifting device 100 can drive the boom 920 through the piston rod, to perform lifting and lowering, thereby lifting the objects to achieve the lifting purpose.

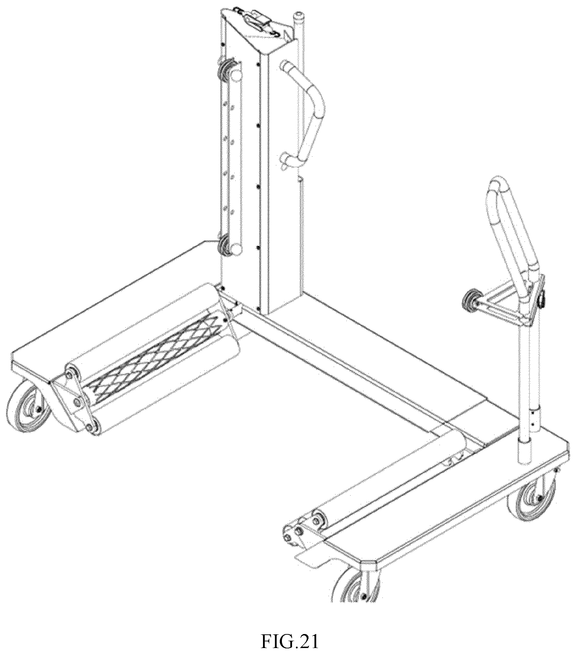

Referring to FIG.21, the tire mounting/dismounting and transport apparatus is further provided in the embodiment, which comprises the lifting device 100 as described above and tire V-blocks. The lifting oil cylinder 110 is provided with a piston rod, the tire V-blocks are connected with the piston rod. The piston rod can extend to push the left and right tire V-blocks to move towards each other and get closer, thereby lifting the wheel. The piston rod can retract to enable the left and right tire V-blocks to move away from each other and get farther away, thereby lowering the wheel.

In summary, the oil circuit system of the lifting device, the lifting device 100, the electric jack, the press, the crane, and the tire mounting/dismounting and transport apparatus provided in the embodiments have advantages at least as follows. The oil circuit system of the lifting device comprises the gear pump assembly 210 and the plunger pump assembly 220, wherein the gear pump assembly 210 can pump the hydraulic oil with large displacement but low pressure into the lifting oil cylinder 110 of the lifting device 100, and the plunger pump assembly 220 can pump the hydraulic oil with small displacement but high pressure into the lifting oil cylinder 110 of the lifting device 100; Under no-load or low-pressure conditions of the lifting device 100, the gear pump assembly 210 can quickly pump a larger volume of low-pressure hydraulic oil, enabling quick lifting or lowering of the lifting device 100. It solves the problem of low displacement speed under no-load low-pressure conditions of the hydraulic lifting pumps in the art, improving user experience; Under high-pressure conditions of the hydraulic lifting pump, the plunger pump assembly 220 can quickly pump higher pressure hydraulic oil to the lifting oil cylinder 110 to enable slow lifting or lowering, whereby the lifting device 100 can have slow displacement to meet user's normal operational requirements.
All the above are merely some preferred embodiments of the disclosure. It should be noted that those skilled in the art may obtain modifications and equivalents without departing from the technical principle of the disclosure. The disclosure is intended to cover such modifications and equivalents.

## Claims

1. An oil circuit system applicable for a lifting device, **characterized by** comprising:
a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800); and
an oil pressure within the lifting oil cylinder (110) in the second operating condition is greater than an oil pressure within the lifting oil cylinder (110) in the first operating condition.

2. The oil circuit system according to claim 1, wherein the first valve is a 4-Way, 2-Position valve (300).

3. The oil circuit system according to claim 2, wherein the first oil feed line (252) comprises a first oil inlet (251), a gear pump assembly (210) and a first oil outlet (2521) connected in such sequence along a first oil inlet direction through a pipeline, the first oil inlet (251) is connected with the tank (800), and the first oil outlet (2521) is connected with the lifting oil cylinder (110).

4. The oil circuit system according to claim 3, wherein the 4-Way, 2-Position valve (300) comprises a port A, a port B, a port C, and a port D, wherein the port A is connected with the first oil outlet (2521), the port B is connected with the first oil feed line (252), the port C is connected with the pressure relief line (255), and the port D is connected with the oil return line (256).

5. The oil circuit system according to claim 4, wherein, during a forward rotation of the gear pump assembly (210), the 4-Way, 2-Position valve is in a first position, where the port A is in communication with the port B, the port C and the port D are not in communication with each other, and the lifting oil cylinder (110) is in a lifted state;
during a reverse rotation of the gear pump assembly (210), the 4-Way, 2-Position valve is in a second position, where the port A is in communication with the port B, and the port C is in communication with the port D, and the lifting oil cylinder 110 is in a lowered state.

6. The oil circuit system according to claim 4, wherein the 4-Way, 2-Position valve (300) is provided with a communication cavity (310), a pressure relief piston (320), and a third spring (322); the communication cavity (310) is divided into an oil pass-through cavity (311) and an oil pressure relief cavity (312) by the pressure relief piston (320), the port A and the port B are located in the oil pass-through cavity (311), the port C and the port D are located in the oil pressure relief cavity (312), the oil pressure relief cavity (312) is connected with the pressure relief line (255) via the port C and with the oil return line (256) via the port D, and the oil pass-through cavity (311) is connected with the first oil outlet (2521) via the port A and with the first oil feed line (252) via the port B.

7. The oil circuit system according to claim 6, wherein, in a normal state of the third spring (322), the pressure relief piston (320) is biased to keep the port D sealed by the pressure relief piston (320), such that the 4-Way, 2-Position valve (300) is in a state in which the port C and the port D are not in communication.

8. The oil circuit system according to claim 3, wherein the second oil feed line (253) is provided with a second oil inlet (2533), a plunger pump assembly (220), a second one-way valve (2531), and a second oil outlet (2534), which are connected in such sequence along a second oil inlet direction through a pipeline, the second oil inlet (2533) is connected to a pipeline between the gear pump assembly (210) and the 4-Way, 2-Position valve (300), and the second oil outlet (2534) is connected with the lifting oil cylinder (110).

9. The oil circuit system according to claim 8, wherein the oil inlet/outlet line (254) has one end connected with the first oil outlet (2521) and the second oil outlet (2534), and another end connected with the lifting oil cylinder (110).

10. The oil circuit system according to claim 3, wherein the pressure relief line (255) is provided with an inlet port connected to a pipeline between the gear pump assembly (210) and the first oil inlet (251), and an outlet port connected with the 4-Way, 2-Position valve (300).

11. The oil circuit system according to claim 3, wherein the oil return line (256) is provided with an inlet port connected with the 4-Way, 2-Position valve (300) and an outlet port connected with the tank (800).

12. The oil circuit system according to claim 6, wherein a first one-way valve (2543) is provided, which is located at an oil line between the first oil outlet (2521) and the 4-Way, 2-Position valve (300); the 4-Way, 2-Position valve (300) is configured to drive the first one-way valve (2543) to open, so as to allow the hydraulic oil to flow back to the gear pump assembly (210) via the first oil outlet (2521).

13. The oil circuit system according to claim 12, wherein the pressure relief piston (320) is provided with a push rod (321) for opening the first one-way valve (2543); wherein the oil pass-through cavity (311) is positioned at a pipeline between the first one-way valve (2543) and the gear pump assembly (210), and the first one-way valve (2543) is connected with the oil pass-through cavity (311) via the port A.

14. The oil circuit system according to claim 13, wherein, during a forward rotation of the gear pump assembly (210), the hydraulic oil is pumped to the oil pass-through cavity (311), the first one-way valve (2543), and the first oil outlet (2521), and the port D is kept sealed by the pressure relief piston (320);
during a reverse rotation of the gear pump assembly (210), the hydraulic oil is pumped from the oil pass-through cavity (311) to the oil pressure relief cavity (312) through the pressure relief line (255), the hydraulic oil within the oil pressure relief cavity (312) pushes the pressure relief piston (320) to move to open the port D, to allow the port C and the port D of the 4-Way, 2-Position valve (300) in communication with each other, and the pressure relief line (255) in communication with the tank (800) through the oil pressure relief cavity (312) and the oil return line (256); and meanwhile, the pressure relief piston (320) opens the first one-way valve (2543) by the push rod (321), to allow the hydraulic oil within the lifting oil cylinder (110) to be pumped by means of the gear pump assembly (210) to the inlet port of the pressure relief line (255), and then back to the tank (800) sequentially through the port C of the 4-Way, 2-Position valve (300), the port D of the 4-Way, 2-Position valve (300), and the oil return line (256).

15. The oil circuit system according to claim 2, wherein the second valve is the first overflow valve (400), which comprises a first overflow port (2561) connected with a pipeline between the gear pump assembly (210) and the 4-Way, 2-Position valve (300), and the first overflow valve (400) is connected with the oil return line (256).

16. The oil circuit system according to claim 8, wherein the oil return line (256) is further provided with a second overflow port (2562) and a second overflow valve (500) sequentially connected through a pipeline, an overflow outlet port of the second overflow valve (500) is connected with the tank (800) through the oil return line (256), and the second overflow port (2562) is connected with a pipeline between the plunger pump assembly (220) and the second oil outlet (2534).

17. The oil circuit system according to claim 8, further comprising a third one-way valve (2532) provided on a pipeline between the second oil inlet (2533) and the plunger pump assembly (220).

18. A lifting device, **characterized by** comprising a hydraulic pump (200) and a driving mechanism (230), wherein the hydraulic pump (200) comprises a drive spindle (240) and a pump body (250);
the lifting device further comprises an oil circuit system, and the oil circuit system comprises: a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800);
an oil pressure within the lifting oil cylinder (110) in the second operating condition is greater than an oil pressure within the lifting oil cylinder (110) in the first operating condition; and
the first oil feed line (252) comprises a gear pump assembly (210), the second oil feed line (253) comprises a plunger pump assembly (220), and the drive spindle (240) is configured to drive the gear pump assembly (210) and the plunger pump assembly (220).

19. The lifting device according to claim 18, wherein all of the first oil feed line (252), the second oil feed line (253), and the oil return line (256) are provided on the pump body (250);
the gear pump assembly (210) comprises a drive gear (211) and a driven gear (212) which are engaged with each other; the plunger pump assembly (220) comprises an oil inlet plunger (221) and an eccentric cam (222), a telescopic end of the oil inlet plunger (221) abuts against an outer side of the eccentric cam (222); the drive spindle (240) is disposed in the pump body (250) and rotatably connected with the pump body (250), and both the drive gear (211) and the eccentric cam (222) are fixedly connected to the drive spindle (240);
the driving mechanism (230) is configured to drive the drive spindle (240) to rotate to drive the eccentric cam (222) and thus drive the telescopic end of the oil inlet plunger (221) to perform reciprocating extension and retraction and drive the drive gear (211) and the driven gear (212) to rotate.

20. The lifting device according to claim 19, wherein a rotating bearing (223) is sleeved on an outer side of the eccentric cam (222), and the rotating bearing (223) abuts against the telescopic end of the oil inlet plunger (221).

21. The lifting device according to claim 19, further comprising a reduction gear (600), wherein the reduction gear (600), the eccentric cam (222), and the drive gear (211) are arranged in such sequence along an axis of the drive spindle (240), and a drive shaft of the driving mechanism (230) is drivingly connected with the reduction gear (600).

22. The lifting device according to claim 19, further comprising a control panel, and the control panel is in signal connection with the driving mechanism (230).

23. An electric jack, **characterized by** comprising: a lifting device (100) and a jacking mechanism (900);
the lifting device comprises a hydraulic pump (200) and a driving mechanism (230), wherein the hydraulic pump (200) comprises a drive spindle (240) and a pump body (250);
the lifting device further comprises an oil circuit system, and the oil circuit system comprises: a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800);
an oil pressure within the lifting oil cylinder (110) in the second operating condition is greater than an oil pressure within the lifting oil cylinder (110) in the first operating condition;
the first oil feed line (252) comprises a gear pump assembly (210), the second oil feed line (253) comprises a plunger pump assembly (220), and the drive spindle (240) is configured to drive the gear pump assembly (210) and the plunger pump assembly (220); and
the jacking mechanism (900) is connected with the lifting device (100), and the lifting device (100) is configured to drive the jacking mechanism (900) to perform lifting and lowering.

24. A press, **characterized by** comprising: a lifting device (100) and a pressure block (910);
the lifting device comprises a hydraulic pump (200) and a driving mechanism (230), wherein the hydraulic pump (200) comprises a drive spindle (240) and a pump body (250);
the lifting device further comprises an oil circuit system, and the oil circuit system comprises: a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800);
an oil pressure within the lifting oil cylinder (110) in the second operating condition is greater than an oil pressure within the lifting oil cylinder (110) in the first operating condition;
the first oil feed line (252) comprises a gear pump assembly (210), the second oil feed line (253) comprises a plunger pump assembly (220), and the drive spindle (240) is configured to drive the gear pump assembly (210) and the plunger pump assembly (220); and
the lifting oil cylinder (110) is provided with a piston rod which is liftable, and the piston rod is connected with the pressure block (910).

25. A crane, **characterized by** comprising: a lifting device (100) and a boom (920);
the lifting device comprises a hydraulic pump (200) and a driving mechanism (230), wherein the hydraulic pump (200) comprises a drive spindle (240) and a pump body (250);
the lifting device further comprises an oil circuit system, and the oil circuit system comprises: a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800);
an oil pressure within the lifting oil cylinder (110) in the second operating condition is greater than an oil pressure within the lifting oil cylinder (110) in the first operating condition;
the first oil feed line (252) comprises a gear pump assembly (210), the second oil feed line (253) comprises a plunger pump assembly (220), and the drive spindle (240) is configured to drive the gear pump assembly (210) and the plunger pump assembly (220); and
the lifting oil cylinder (110) is provided with a piston rod which is liftable, the boom (920) is provided with a hook (930), and the boom (920) is connected with the piston rod.

26. A tire mounting/dismounting and transport apparatus, **characterized by** comprising: a lifting device (100) and a tire V-block;
the lifting device comprises a hydraulic pump (200) and a driving mechanism (230), wherein the hydraulic pump (200) comprises a drive spindle (240) and a pump body (250);
the lifting device further comprises an oil circuit system, and the oil circuit system comprises: a lifting oil cylinder (110), a tank (800), a first oil feed line (252), a second oil feed line (253), an oil inlet/outlet line (254), a pressure relief line (255), an oil return line (256), a first valve, and a second valve;
wherein the first valve is connected with the first oil feed line (252), the pressure relief line (255), and the oil return line (256); the second valve is connected with the first oil feed line (252) and the oil return line (256); the oil inlet/outlet line (254) has one end connected with the first oil feed line (252) and the second oil feed line (253), and another end connected with the lifting oil cylinder (110);
in a first operating condition of the lifting oil cylinder (110), both the first oil feed line (252) and the second oil feed line (253) supply hydraulic oil to the lifting oil cylinder (110);
in a second operating condition of the lifting oil cylinder (110), the second oil feed line (253) supplies the hydraulic oil to the lifting oil cylinder (110), the hydraulic oil within the first oil feed line (252) flows to the oil return line (256) via the second valve and returns to the tank (800);
an oil pressure within the lifting oil cylinder (110) in the second operating condition is greater than an oil pressure within the lifting oil cylinder (110) in the first operating condition;
the first oil feed line (252) comprises a gear pump assembly (210), the second oil feed line (253) comprises a plunger pump assembly (220), and the drive spindle (240) is configured to drive the gear pump assembly (210) and the plunger pump assembly (220); and
the lifting oil cylinder (110) is provided with a piston rod, and the tire V-block and the piston rod are connected.
